# EUROPEAN PATENT APPLICATION

(11) **EP 1 783 424 A2**
(43) Date of publication of application: **09.05.2007**
(21) Application number: 06022809.5
(22) Date of filing: 02.11.2006
(51) Int. Cl.: F23B 50/12

(54) **A biomass transport system and a bio fuel firing plant**

(30) Priority: 02.11.2005 DK 200501516
(71) Applicant: Hollensen Energy A/S, 7451 Sunds (DK)
(72) Inventor: Jensen, Henning Sigfred, DK-8660 Skanderborg (DK); Jensen, Jens-Ole Aagaard, DK-8600 Silkeborg (DK)
(74) Representative: Olesen, Kaj

(57) **Abstract**

The invention relates to a biomass transport system (1) chiefly for the feeding of bio fuel to a furnace (8) in a bio fuel firing plant (7), comprising at least one worm (15) with at least one centre shaft (22) and at least one helix plate part (23). The biomass transport system (1) also comprises at least one drive element (9) for the rotation of said worm (15) around its longitudinal axis, and at least one outer pipe (12) which substantially surrounds said least one worm (15) for the whole of the longitudinal transporting length (T) of the worm (15), and where said outer pipe (12) further comprises a feed-in opening (14) and a discharge opening (13). The biomass transport system is characterised in that said least one outer pipe (12) and said least one worm (15) are displaceable in relation to each other in the longitudinal direction.

The invention also relates to a bio fuel firing plant (7) and a method for the feeding of bio fuel to the furnace (8) in a bio fuel firing plant (7).

Finally, the invention relates to a method of safeguarding against backfire through a biomass transport system (1), and the use of a biomass transport system (1).

## Description

### Scope of the invention

The present invention relates to a biomass transport system according to the preamble to claim 1, a bio fuel firing plant, a method for the feeding of bio fuel to the furnace in a bio fuel firing plant, a method of safeguarding against backfire through a biomass transport system, and use of a biomass transport system.

### State of the art

Increasing oil prices and increased environmental demands make it more and more attractive to fire with bio fuel, and especially for district heating stations and larger industrial plants a considerable saving both financially and from the environmental point of view can be achieved by firing with one or more forms of bio fuel such as straw, wood chips, grain, nutshells, corncobs.

For example, straw firing plants can function in accordance with several principles. In straw firing plants, it is know to fire with whole bales, and it is also known to fire by means of the "cigar" method, where the bale is pushed in to the furnace in step with the burning of the front end of the bale. The disadvantage with these two methods is that the straw in the bales is very compressed, and it is very difficult to control the combustion process, whereby the risk of increased emission of materials which are detrimental to the environment and the risk of poor utilisation of the fuel is increased.

Due to these disadvantages, one of the most widespread methods is that of tearing up the straw bales before the more or less loose straw is fed to the furnace. Since the straw is very inflammable and easily ignited, it is fed in in portions so that the fire in the furnace can not spread rearwards in the system. This method is described among other things in the European Patent Application ER 0 056 425 A1. The disadvantages with this method are that when the amount of straw in the furnace constantly varies, because the straw is fed in in portions, it is thus difficult to control the combustion and herewith to ensure optimum utilisation of fuel and minimise the risk that the combustion produces materials which are detrimental to the environment.

The object of the invention is to provide a biomass transport system for the feeding of biomass to the furnace in a bio fuel firing plant which does not suffer the disadvantages and the problems for the above-mentioned known technique. It is especially an object of the invention to provide a system which in a simple and inexpensive manner enables an effective utilisation of the bio fuel, at the same time that the risk of the fire in the furnace spreading rearwards in the bio fuel firing plant through the biomass transport system - is reduced.

### The invention

The invention relates to a biomass transport system, chiefly for the feeding of bio fuel to the furnace in a bio fuel firing plant. The biomass transport system comprises at least one worm with at least one centre shaft and at least one helix plate part, and at least one driving element for the rotation of said worm around its longitudinal axis, and at least one outer pipe which substantially surrounds said least one worm for the whole of its biomass transporting length, and where said outer pipe further comprises a feed-in opening and a discharge opening, and where said at least one outer pipe and said at least one worm are displaceable longitudinally in relation to each other. The biomass transport system is characteristic in that said least one outer pipe at said discharge opening extends longer in the longitudinal direction than said least one helix plate part, whereby a buffer zone is defined between said helix plate part and said discharge opening, and where the length of said buffer zone can be adjusted when said least one outer pipe and said least one worm are displaced longitudinally in relation to each other.

It is advantageous to use a worm for feeding the biomass to the furnace in a bio fuel firing system, inasmuch as it provides the possibility for the feeding to be effected in a substantially continuous manner. The possibility of utilising the fuel effectively is hereby improved, and the risk of the emission of toxic materials is reduced.

Moreover, it is advantageous to let the biomass transport system's outer pipe and worm be displaceable in relation to each other in the longitudinal direction, inasmuch as this enables the length of the buffer zone at the biomass transport system's discharge opening to be adjusted. Such a buffer zone is particularly advantageous if the biomass transport system is used for the transport of straw material in the form of e.g, barley-, wheat-, rye-, spelt-, oats-, rape- or seed-grass straw, where the buffer zone can be used to establish a plug of straw material which reduces or completely eliminates the risk of backfire through the biomass transport system. That the outer pipe and the worm are displaceable in relation to each other is advantageous in that one can hereby regulate the length of said plug, and herewith also somewhat control the degree of compression of the straw material in the plug. One can thus control the burning-through time of the plug, whereby the risk of a backfire taking place is reduced.

Furthermore, it is an advantage that the outer pipe and the worm are displaceable in relation to each other, inasmuch as this provides the possibility of pushing out the biomass which is present in the biomass transport system in the vicinity of the discharge opening. This will be advantageous if, e.g., too high a temperature is registered in said biomass, which indicates that there is a risk of backfire. The risk that the fire in the furnace can spread back through the biomass transport system and herewith damage the biomass transport system or other equipment, or at worst ignite the biomass store, is hereby further reduced.

A buffer zone at the discharge opening is additionally advantageous in that such a zone, where the biomass gets accumulated inside the outer pipe, reduces the risk of backfire through the biomass transport system. The length of this buffer zone is thus regulated when the outer pipe and the worm are displaced in relation to each other.

One aspect of the invention is that said least one outer pipe is stationary, and said least one worm is displaceable inside said least one outer pipe.

Since it is advantageous for the combustion process that the biomass is supplied to the same place in the furnace the whole time, it is thus advantageous that the outer pipe is stationary, and herewith that the discharge opening is stationary. Moreover, it is advantageous from the construction point of view that the outer pipe is stationary when the biomass transport system is implemented in a biomass firing plant, since the outer pipe is outermost and can hereby be used to fix the biomass transport system.

An aspect of the invention is that said least one centre shaft and said least one helix plate part have substantially constant outside diameters along the whole of said least one worm's biomass transporting longitudinal direction.

For reasons of production technique, it is advantageous that both the centre shaft and the helix plate part have constant outside diameters. Moreover, the biomass transport system is more effective for the transport of a biomass when the outer diameters are constant.

One aspect of the invention is that said least one helix plate part on said at least one worm has a pitch of between 10 and 300%, preferably between 30 and 220%, and most preferably between 50 and 140% of said helix plate part's outer diameter, and that said least one helix plate part has a substantially constant pitch.

If the pitch of the worm is too great, the gravitational effect will be able to hold back the biomass, whereby the worm's ability to transport the biomass forwards is reduced if the biomass transport system has a pitch which exceeds a certain level. If the pitch is too low, it can be difficult for biomasses such as straw and chips to find their way down in the worm so that the biomass can be driven forwards. The present pitch ranges are therefore an expression for advantageous relationship between the worm's ability to transport the biomass forwards, and the probability of the biomass finding its way quickly down in the worm.

Moreover, it is an advantage that the worm has a constant pitch, in that a varying pitch will have the result that the ability of the biomass transport system to transport the biomass forwards is reduced.

An aspect of the invention is that said biomass transport system comprises control elements which ensures that the at least one worm rotates in a substantially constant manner during normal operation of said biomass firing plant.

It is advantageous that the worm runs continuously, inasmuch as this provides the possibility of feeding the furnace in a continuous manner, whereby it is easier to control the combustion process.

An aspect of the invention is that said least one outer pipe also comprises a blocking unit such as a fire shutter.

In the event of backfire, it is advantageous that a blocking unit such as a fire shutter is mounted at a place on the outer pipe which can substantially block off the outer pipe so that the risk of a spreading of the fire can be reduced, and so that the effect of possible fire-extinguishing means such as Halon, nitrogen, water-mist, carbon dioxide etc. is increased.

The invention also relates to a biomass firing plant which is characteristic in that the bio fuel is fed to the furnace in said biomass firing plant by means of one or more biomass transport systems according to any of the claims 1 to 6.

It is advantageous to use one or more biomass transport systems for feeding the bio fuel to one or more furnaces in a biomass firing plant, inasmuch as the biomass transport system provides the possibility of feeding the biomass in a continuous manner, whereby a more effective combustion can be achieved, in that the combustion process is easier to control when the amount of biomass in the furnace is substantially constant.

Furthermore, it is advantageous to use said biomass transport system for the feeding of biomass to the furnace, in that the biomass transport system reduces the risk of backfire.

The invention also relates to a method for the feeding of bio fuel to the furnace in a bio fuel firing plant comprising the following steps:
- said bio fuel is fed into a biomass firing system through a feed-in opening,
- a rotating worm in said biomass transport system transports said biomass towards a discharge opening in said biomass transport system,
- said biomass is compressed near the discharge opening of said biomass transport system when said bio fuel meets resistance from bio fuel heaped up immediately in front of said discharge opening, and/or when said bio fuel meets resistance in said biomass transport system in the form of frictional resistance.

It is advantageous to use a rotating worm for the transport of biomass since this provides the possibility of feeding the furnace in a continuous manner. Moreover, it is advantageous that the biomass is compressed near the discharge opening in the outer pipe of the biomass transport system, inasmuch as the biomass thus forms a plug which is difficult to burn through, hereby increasing the safeguard against back fire.

It is also advantageous that the bio fuel is compressed in the biomass transport system by means of frictional resistance, inasmuch as this is a very simple an cheap manner of ensuring that the fuel is compressed, so that the risk of backfire is reduced.

The invention also relates to a method of safeguarding against backfire through a biomass transport system for the feeding of bio fuel to the furnace in a bio fuel firing plant where:
- biomass is transported from a feed-in opening to a discharge opening in said biomass transport system by rotating a worm in an outer pipe,
- the temperature is measured in one or more places in said biomass transport system, and where
- said worm is displaced forwards towards said discharge opening, after which said worm is drawn back and away from said discharge opening, at least until a blocking unit, such as a fire shutter in said biomass transport system, is passed, after which said blocking unit substantially blocks passage through said biomass transport system if said temperature exceeds a predefined level.

This method is advantageous for the reason that the possibility of feeding the furnace in a continuous manner at the same time also provides high security against backfire, and that in the event of the registration of too high a temperature in the biomass transport system, this method thus provides a high security that the fire is quickly extinguished before it spreads further back in the biomass firing plant.

The invention also relates to the use of a biomass transport system according to any of the claims 1 to 7, and methods according to claim 8 or 9, in connection with a bio fuel firing plant with a power output of not less than 1 MW, such as a district heating station.

It is advantageous to use a biomass transport system according to the invention with e.g. a district heating station or a large industrial plant with a power output of not less than 1 MW, in that the consequences of a backfire in large plants are relatively great, and inasmuch as strict statutory demands are made regarding the number of materials detrimental to the environment which can be emitted from such plants.

### The drawing

In the following, the invention will be explained in more detail with reference to the drawing, where
- fig. 1: shows an example of a layout of a modem straw-firing plant seen from the side,
- fig. 2: shows a cross-section of an embodiment of a biomass transport system seen from the side,
- fig. 3: shows a biomass transport system for straw transport seen from the end in towards the discharge opening, and
- fig. 4: shows a biomass transport system for the transport of loose material such as wood pellets, grain, nutshells and the like seen from the end in towards the discharge opening.

### Detailed description

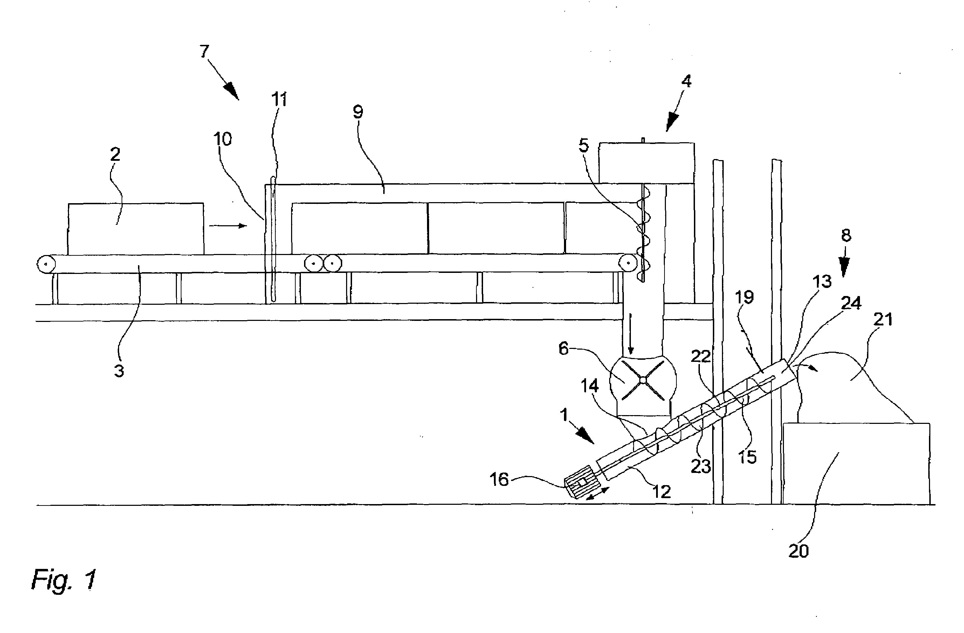

Fig. 1 shows an example of a layout of a bio fuel plant 7 in the form of a straw- firing plant 7 as could appear, for example, in a district heating station.

A bale of straw 2 in the form of a round, mini-, medi- or, as in this case, a big bale 2 is placed on a conveyor 3 which automatically feeds the bale 2 into a supply housing 9. If a fire should arise in or around the supply housing 9, the front end 10 can be closed with an automatic door or shutter 11.

In the supply housing 9, the bales are fed forward towards a bale tearing-up unit 4. The bale tearing-up unit 4 in this case consists of a number of tearing-up worms 5 which rotate so that the worms 5 "screw" downwards. When the bale is pressed against these worms 5, the foremost part of the bale 2 is torn off and the more or less loose straw continues down into a sluice 6. In principle, the sluice 6 functions like a swing door which rotates so that the biomass can pass, while at the same time it is ensured that the passage of air is minimised, since as a rule there is an under-pressure in the furnace in a bio firing plant 7.

Hereafter, the straw 21 continues down into a biomass transport system 1 which transports the straw 21 into the furnace 8 of the straw-firing plant where the straw 21 is burned.

In another embodiment of the invention, the biomass firing plant 7 could be used for firing with e.g. grain, wood pellets, nutshells, chips or other relatively loose biomass material. In such case the loose biomass material could be fed to the biomass transport system 1 from a silo or other form of container.

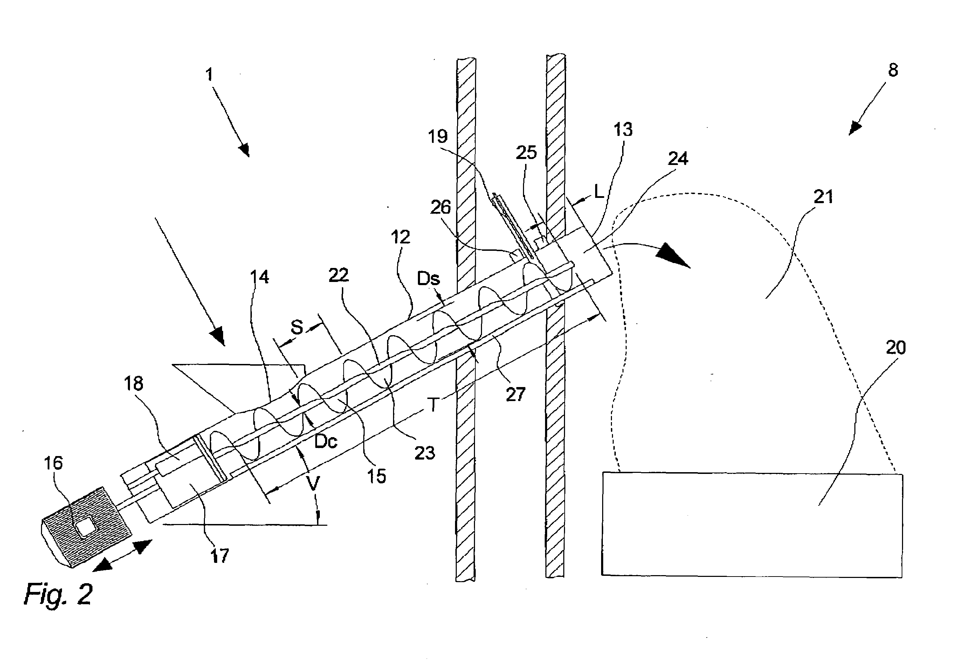

Fig. 2 shows a cross-section of an embodiment of a biomass transport system 1 seen from the side. In this embodiment of the invention, the biomass transport system 1 consists of an outer pipe 12 with a discharge opening 13 and a feed-in opening 14. Placed in a substantially concentric manner inside the outer pipe 12 there is a worm 15 which, by rotation, can transport the fuel from the feed-in opening 14 to the discharge opening 13. Except for the hole which constitutes the feed-in opening 14, the outer pipe 12 substantially surrounds the worm 15 for the whole of its transporting length T. This means that apart from the feed-in opening 14, at least all of that part of the worm 15 which transports the biomass during normal operation is surrounded by the outer pipe 12.

The worm 15 consists of a centre shaft 22 around which there is fastened a helix plate part 23. The worm 15 could be made of steel so that the one or more helix plate parts 23 could be welded to one another and to the centre shaft 22. In this embodiment, both the centre shaft 22 and the helix plate part 23 have a constant diameter Dc, Ds along their whole length, but in another embodiment both the outer diameter Dc of the centre shaft 22 and the outer diameter Ds of the helix plate part 23 could vary outside the worm's 15 effective biomass transporting longitudinal length T. Moreover, the helix plate part 23 has a constant pitch S along the whole of its length, but in another embodiment the pitch S could vary outside the effective biomass transporting length T of the worm 15.

The worm 15 extends a distance shorter than the outer pipe, so the outer pipe 12 extends further than the helix plate part 23 of the worm, whereby a buffer zone 24 is formed near the discharge opening 13 of the biomass transport system 1. In this embodiment the worm 15 has an outer diameter of approx. 420 mm, and the outer pipe 12 has an inner diameter of approx. 600 mm. In another embodiment of the invention, both the outer diameter of the worm 15 and the inner diameter of the outer pipe 12 could be both larger and smaller.

In this case, the biomass transport system 1 has an inclination V of 20°. This inclination V can naturally be both greater and smaller in another embodiment of the invention, but to avoid having to adjust the angle V at which the biomass material is fired, 20° is a good compromise, whereby all materials can be transported through the biomass transport system 1. If the inclination V is too steep, problems can arise with e.g. the transport of loose materials such as grain or wood pellets, since these will simply roll back, while an inclination V which is not steep enough will increase the risk of backfire. If the biomass transport system 1 were horizontal, loose material for example would lie in the bottom of the biomass transport system 1, which makes it possible for fire to spread rearwards over the material all the way through the biomass transport system 1.

The rotation of the worm 15 in this case is effected by a gear motor 16 connected to the worm 15 outside the outer pipe 12, but in another embodiment the drive element 16 which effects the rotation of the worm 15 could be placed in the outer pipe 12, and in another embodiment it could be a hydraulic motor, a pneumatically-driven motor or something else.

In the bottom of the worm there is placed a displacement unit 18 which in this case is a hydraulic cylinder. The displacement unit 18 can displace the worm forwards and backwards in the longitudinal direction inside the outer pipe 12. In this embodiment, this displacement will also result in the displacement of the drive element 16, but in another embodiment the drive element 16 could be stationary during the displacement.

To effect/control this movement, the biomass transport system 1 is also provided with a guide unit 17 which substantially fixes the worm 15 against radial movement, while the worm 15 can freely move axially.

The biomass transport system 1 is also provided with a blocking unit 19, in this case in the form of a fire shutter. In this embodiment the blocking unit 19 is placed approx. 1200 mm down the outer pipe measured from the discharge opening 13, but in another embodiment of the invention it could be placed somewhere else in the biomass transport system 1.

In a preferred embodiment of the invention, the blocking unit 19 is a fire shutter which is activated only in the case of risk of backfire in the biomass transport system 1 or in a similar emergency situation, where it is necessary for the fire shutter to close the biomass transport system 1. The fire shutter 19 is thus always open and inactive during normal operation of the biomass transport system 1.

The shown biomass transport system 1 functions by the gear motor 16 driving the worm 15 so that it rotates while the biomass is fed to the system 1 via the feed-in opening 14. If the biomass is straw 21 in the form of straw from barley, wheat, oats, rye, rape, spelt, seed grass or a similar straw material, the straw 21 is transported through the biomass system 1 and out via the discharge opening 13 to the furnace 8, where it lands on a kind of table 20. When a suitable amount of straw 21 has been fed to the furnace 8, the straw is ignited to start the combustion. While the combustion is taking place, air can be fed to the furnace, possibly via the table 20, in a varying amount, so that the bio fuel 21 is burned as effectively as possible, and so that materials detrimental to the environment emitted via the smoke are reduced or minimised, and the fuel is thus utilised as effectively as possible.

The amount of straw 21 fed to the system results in a building-up of a heap in front of the biomass transport system's discharge opening 13. This heaping-up has the effect that the straw 21 in the biomass transport system 1 meets resistance when it shall leave the discharge opening 13. The straw 21 is hereby compressed in the buffer zone 24, and a plug is formed which makes it very difficult or impossible for the fire in the furnace 8 to burn back through the biomass system 1.

The plug can also be formed by the bio fuel - e.g. in the form of straw - due to the frictional resistance between the straw and the outer pipe 12, clumping together in the buffer zone 24. Such a clumping-together will mean that the straw presses harder against the walls of the outer pipe 12, whereby the straw is further compressed. This compression will thus continue until the bio fuel leaves the buffer zone 14 via the discharge opening 13.

The reason why this plug reduces the risk of or completely prevents backfire in the system 1 it that when the straw 21 is compressed, it is only the front end of the plug which burns because oxygen can not come in to that part of the plug which is present in the outer pipe 12. If new straw 21 is not fed to the biomass transport system 1 for a period of time, there is naturally the risk that the plug gets burned through and the fire is possibly spread back through the system 1, but a burning-through will take so long a time that there is no problem during normal operation.

The length of this straw plug can be varied by driving the worm 15 forwards or backwards in the outer pipe 12, so the length L of the buffer zone 24 becomes respectively shorter or longer. This length adjustment could, for example, be carried out manually by an operator operating a manually-operated valve connected to the displacement unit 18. The operator could hereby displace the worm 15 forwards or backwards to the most suitable position for a given biomass material. The displacement could also be carried out by means of a spindle connection, a rack-and-pinion connection or another system which is suitable for implementing a manually adjustable translatory movement.

In another embodiment of the invention, the length of the buffer zone 25 could also be adjusted automatically, e.g. by the automatic adjustment of the position of the worm on the basis of a measurement of the instantaneous load of the worm 15, or by one or more proximity sensors 25 placed at the buffer zone registering whether a plug has been formed and possibly also the degree to which this plug is compressed. The positioning of the worm 15 can thus be adjusted on the basis of this information. In fig. 2 there is shown such a proximity sensor 25 in the form of an ultrasound sensor which can register how much material is present at a given distance in front of the proximity sensor 25. In another embodiment of the invention this proximity sensor 25 could also be an analogically-connected capacitive sensor, or another form of sensor which is suitable for detecting whether there is a biomass in front of it, and possibly also the degree to which this is compressed.

If the transported biomass is e.g. wet seed-grass straw, the buffer zone 24 should perhaps not be very long, since wet seed-grass straw is easily compressed. If the buffer zone 24 in this case becomes too long, the resistance is increased and in the worst case the biomass transport system 1 could be overloaded, whereby the gear motor's overload protection cuts out, or mechanical breakdown could occur. If, for example, dry rape straw is transported, the length L of the buffer zone 24 shall perhaps be relatively long, since rape straw is relatively stiff and thus difficult to compress to a degree where the plug becomes so compact that backfiring can be prevented.

To further safeguard against burning back, at one or more places in the biomass transport system 1 there is placed one or more temperature gauges 26. In fig. 2 it is shown that a thermometer 26 is placed immediately after the blocking unit 19. This thermometer 26 continuously measures e.g. the temperature in the outer pipe 12, and if the temperature exceeds a predetermined level such as e.g. 95°C, a fire procedure is started, Via an independent hard-wired circuit, a signal is sent to a hydraulic valve so that this is reset, whereby the worm 15 is displaced forwards so that the material in the buffer zone 24 is pushed out in the furnace 8, after which the worm 15 returns at least until it has passed the blocking unit 19. The blocking unit 19, which in this case is a fire shutter, moves down and blocks off the outer pipe 12, and at the same time fire shutters 19 at other places in the firing plant 7 will also be closed, so that the risk of the spreading of a possible fire is reduced. Hereafter, there will probably be implemented a fire extinguishing procedure, where e.g. the biomass transport system 1 is filled with an inactive gas such as e.g. nitrogen, which expels the oxygen, and a water mist is sprayed in to extinguish a possible fire.

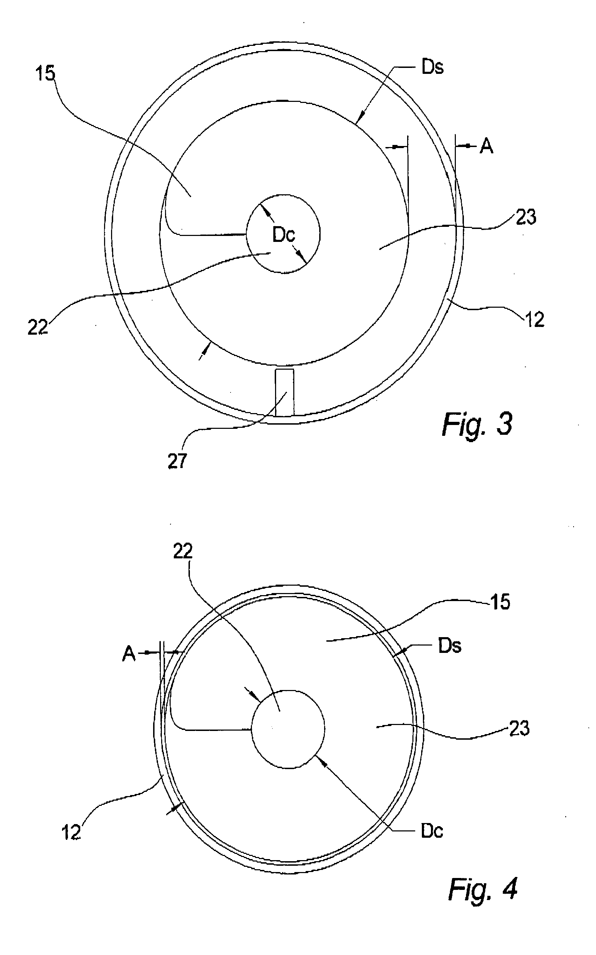

Fig. 3 shows a biomass transport system 1 for straw transport seen from the end in towards the discharge opening 13. To ensure effective transport of e.g. straw material, the distance A between the helix plate part 23 and the outer pipe 12 is relatively great. In order to ensure that the straw 21 does not just whirl around with the worm without moving forwards, the biomass transport system 1 is equipped with a counter-stop rail 27 in the bottom of the biomass transport system 1, but in another embodiment of the invention there could be mounted several counter-stop rails 27 and they could be placed in other places. The counter-stop rail 27 extends substantially for the whole of the transporting length T of the worm 15.

When straw 21 is fed down in the biomass transport system 1, gravitational influence will force it against the bottom of the system where in this case the counter-stop rail 27 is placed. Since the distance between the helix plate part 23 and the rail 27 is relatively short, all or at any rate the main part of the straw 21 will not just whirl around with the worm 15, but will be fed forward by the worm 15.

Fig. 4 shows a biomass transport system 1 for the transport of material such as wood pellets. grain, nutshells and the like seen from the end in towards the discharge opening 13. If the biomass transport system 1 is used for the transport of loose material, the distance A shall then in principle be as small as possible so that the material can not pass between the helix plate part 23 and the outer pipe 12, and slide back opposite the direction of transport. Therefore, a counter-stop rail 27 is not mounted when the biomass transport system 1 is used in a plant 7 where firing shall take place with loose material.

In the foregoing, the invention is described in connection with concrete embodiments, such as those shown in the drawings, but it will be obvious to those familiar with the art that the invention can be varied in innumerable ways within the scope of the subsequent claims.

### List

- 1.: Biomass transport system
- 2.: Straw bale
- 3.: Straw bale conveyor
- 4.: Bale tearing-up unit
- 5.: Tearing-up worm
- 6.: Sluice
- 7.: Biomass firing plant
- 8.: Furnace
- 9.: Feed-in housing
- 10.: Front end of feed-in housing
- 11.: Shutter in feed-in housing
- 12.: Outer pipe
- 13.: Discharge opening
- 14.: Feed-in opening
- 15.: Worm
- 16.: Drive element
- 17.: Guide unit
- 18.: Displacement unit
- 19.: Blocking unit
- 20.: Table
- 21.: Straw
- 22.: Centre shaft
- 23.: Helix plate part
- 24.: Buffer zone
- 25.: Proximity sensor
- 26.: Thermometer
- 27.: Counter-stop rail
- 28.: Angle of inclination
- L.: Length of buffer zone
- T.: Transport length of worm
- Ds: Outer diameter of worm
- Dc: Outer diameter of centre shaft
- A.: Distance between helix plate part and outer pipe
- S.: Pitch of helix plate part

## Claims

1. A biomass transport system (1) chiefly for the feeding of bio fuel to the furnace (8) of a bio fuel firing plant (7) comprising
at least one worm (15) with at least one centre shaft (22) and at least on helix plate part (23)
at least one drive element (9) for rotation of said worm (15) around its longitudinal axis, and
at least one outer pipe (12) which substantially surrounds said least one worm (15) for the whole of the longitudinal transporting length (T) of said worm (15), and where said outer pipe (12) further comprises a feed-in opening (14) and a discharge opening (13),
where said least one outer pipe (12) and said least one worm (15) are displaceable in relation to each other in the longitudinal direction,
**characterized in that**
said at least one outer pipe (12) at said discharge opening (13) extends further in the longitudinal direction than said at least one helix plate part (23), whereby a buffer zone (24) is defined between said helix plate part (23) and said discharge opening (13), and where the length of said buffer zone (24) is adjusted when said at least one outer pipe (12) and said at least one worm (15) are displaced in relation to each other in the longitudinal direction.

2. A biomass transport system (1) according to claim 1, **characterized in that** said at least one outer pipe (12) is stationary and said at least one worm (15) is displaceable inside said at least one outer pipe (12).

3. A biomass transport system (1) according to claim 1 or 2, **characterized in that** said at least one centre shaft (22) and said least one helix plate part (23) have substantially constant outer diameters (Ds, Dc) for the whole of the longitudinal transporting length (T) of the said at least one worm (15).

4. A biomass transport system (1) according to claims 1 to 3, **characterized in that** said at least one helix plate part (23) on said at least one worm (5) has a pitch (S) of between 10 and 300%, preferably between 30 and 220%, and most preferably between 50 and 140% of said helix plate part's outer diameter (Ds), and that said at least one helix plate part (23) has a substantially constant pitch (S).

5. A biomass transport system (1) according to one or more of the claims 1 to 4, **characterized in that** said biomass transport system (1) comprises control elements which serve to ensure that the least one worm (15) rotates in a substantially constant manner during normal operation of said bio fuel firing plant (7).

6. A biomass transport system (1) according to one or more of the claims 1 to 5, **characterized in that** said least one outer pipe (12) further comprises a blocking unit (19) such as a fire shutter.

7. A bio fuel firing plant (7) **characterized in that** the bio fuel is fed to a furnace (8) in said bio fuel firing plant (7) by means of one or more biomass transport systems (1) according to any of the claims 1 to 6.

8. Method for the feeding of bio fuel to the furnace (8) in a bio fuel firing plant (7) comprising the following steps:
• said bio fuel is fed into a biomass transport system (1) through a feed-in opening (14),
• a rotating worm (15) in said biomass transport system (1) transports said bio fuel towards a discharge opening (13) in said biomass transport system (1),
• said bio fuel is compressed near the discharge opening (13) of said biomass transport system (1) when said bio fuel meets resistance from bio fuel heaped up immediately in front of said discharge opening (13) and/or said bio fuel meets resistance in said biomass transport system (1) in the form of frictional resistance.

9. Method of safeguarding against backfire through a biomass transport system (1) for the feeding of bio fuel to the furnace (8) in a bio fuel firing plant (7), where
• biomass is transported from a feed-in opening (14) to a discharge opening (13) in said biomass transport system (1) by the rotation of a worm (15) in an outer pipe (12),
• the temperature is measured in one or more places in said biomass transport system (1), where
• said worm (15) is displaced forwards towards said discharge opening (13), after which said worm (15) is drawn back and away from said discharge opening (13) at least until a blocking unit (19) such as a fire shutter in said biomass transport system (1) has been passed, after which said blocking unit (19) substantially blocks passage through said biomass transport system (1) if said temperature exceeds a predefined level.

10. Use of a biomass transport system (1) according to any of the claims 1 to 7 and the method according to claim 8 or 9, in connection with a bio fuel firing plant (7) with a power output of not less than 1 MW such as a district heating station.
